# EUROPÄISCHE PATENTSCHRIFT

(11) **EP 2 609 362 B1**
(45) Veröffentlichungstag und Bekanntmachung des Hinweises auf die Patenterteilung: **14.10.2015**
(21) Anmeldenummer: 11752470.2
(22) Anmeldetag: 17.08.2011
(51) Int. Cl.: F21S 8/00, F03D 11/00, B64F 1/20, F21Y 101/02

(54) **IR-GEFAHRENFEUER**
IR WARNING LIGHT
BALISE DE DANGER IR

(30) Priorität: 27.08.2010 DE 102010035703
(43) Veröffentlichungstag der Anmeldung: 03.07.2013
(73) Patentinhaber: Senvion GmbH, 22297 Hamburg (DE)
(72) Erfinder: QUELL, Peter, 24783 Osterrönfeld (DE); BOLZ, Detlef, 23627 Gross-Grönau (DE)
(74) Vertreter: Groth, Wieland
(86) Internationale Anmeldenummer: PCT/EP2011/004129
(87) Internationale Veröffentlichungsnummer: WO 2012/025205

(56) Entgegenhaltungen:
- EP-A1- 2 199 608
- EP-B1- 1 282 888
- DE-U1-202007 005 003
- US-A1- 2009 115 336
- US-B1- 6 567 248

## Beschreibung

Die Erfindung betrifft ein Verfahren zum Betrieb einer Windenergieanlage gemäß Anspruch 1 sowie eine Windenergieanlage zur Durchführung eines Verfahrensgemäß Anspruch 6. Die Erfindung betrifft auch ein Verfahren zum Betrieb eines Windparksgemäß Anspruch 11 sowie einen Windpark zur Durchführung des Verfahrensgemäß Anspruch 13.

Windenergieanlagen müssen je nach Standort und Auflagen mit einer bestimmten Flugbefeuerungseinrichtung versehen sein. In Deutschland müssen sie beispielsweise in Abhängigkeit ihrer Gesamthöhe durch ein Hindernisfeuer, ein Gefahrenfeuer, Blattspitzenhindernisfeuer oder "Feuer W" rot gekennzeichnet sein (siehe "Nachrichten für Luftfahrer, Teil I", Deutsche Flugsicherung, Januar 2005). Während Gefahrenfeuer eine Lichtstärke von mehr als I = 2000 cd aufweisen, liegt die Lichtstärke von Hindernisfeuern nur bei mindestens I = 10 cd und beträgt nur einen Bruchteil der Lichtstärke von Gefahrenfeuern. Die Befeuerung wird bei Windenergieanlagen normalerweise immer paarweise und redundant ausgeführt.

Aus der EP 1 282 888 B1 ist eine Flugbefeuerungseinrichtung für einen Windpark bekannt, wobei die einzelnen Windenergieanlagen mit jeweils einer Flugbefeuerungseinrichtung ausgestattet sind und die Windparksteuerung eine Synchronisationseinheit umfasst, die die Leuchtmittel in der Weise synchronisiert, dass Leuchtmittel der verschiedenen Windenergieanlagen zur gleichen Zeit an- bzw. ausgeschaltet werden.

Aus der US 2009/0115336 A1 ist ein Infrarotsignalgerät bekannt, das als Navigationshilfe für die Landebahnen von Flughäfen oder als Boje zur Kennzeichnung einer Fahrrinne für Schiffe vorgesehen ist.

Es ist Aufgabe der Erfindung, ein Verfahren zum Betrieb einer Windenergieanlage zur Verfügung zu stellen und eine Windenergieanlage, die mit einem derartigen Verfahren arbeitet, das bzw. die sicherer ist.

Es ist auch Aufgabe der Erfindung, ein Verfahren zum Betrieb eines Windparks und einen Windpark zur Verfügung zu stellen, das bzw. der sicherer ist.

Die Aufgabe wird hinsichtlich des ersten Verfahrens durch ein eingangs genanntes Verfahren mit den kennzeichnenden Merkmalen des Anspruchs 1 erfüllt.

Unter Flugbefeuerungseinrichtungen werden hier sowohl Gefahrenfeuer als auch Hindernisfeuer verstanden. Üblicherweise weisen moderne Flugbefeuerungseinrichtungen als Leuchtmittel LEDs auf. Gegenüber herkömmlichen Glühdrahtlampen oder Entladungslampen sind LEDs wartungsarm und verschleißfrei. Nachteiligerweise weisen die LEDs jedoch nur ein sehr begrenztes Abstrahlspektrum auf. Beispielsweise strahlen die für die Flugbefeuerungseinrichtungen zu verwendenden roten LEDs Wellenlängen in einem Bereich zwischen λ= 610 bis 750 nm ab. Im sichtbaren Spektralbereich abstrahlende LEDs werden im Weiteren als VIS-LEDs bezeichnet. Zwar werden damit die Anforderungen an die Hinderniskennzeichnung im sichtbaren Lichtspektrum erfüllt. Nachtflüge, insbesondere von Helikoptern, werden normalerweise nicht im Bereich von Windenergieanlagen oder Windparks durchgeführt, sondern die jeweiligen Piloten umfliegen diese Hindernisse üblicherweise. Unter besonderen Umständen, beispielsweise bei der Bergung von Schiffbrüchigen in Offshore-Windparks, könnte es jedoch notwendig sein, nachts in der Nähe von oder in die Windparks hinein fliegen zu müssen. Nachtflüge, insbesondere Nachtflüge von Helikoptern, werden häufig mit Nachtsichtgeräten durchgeführt. Die Nachtsichtgeräte detektieren das Lichtspektrum im nahen Infrarotbereich NIR und übersetzen dieses in sichtbares Licht. Der NIR-Bereich liegt dabei bei Wellenlängen von λ = 750 nm bis λ = 1500 nm. Der Arbeitsbereich der Nachtsichtgeräte deckt dabei, je nach Gerät, verschiedene Spektralbereiche im NIR ab, er reicht jedoch nicht bis in den visuellen Spektralbereich λ = 350nm bis λ = 750nm hinein. Da sich der Spektralbereich der nur im Visuellen abstrahlenden LED-Flugbefeuerungseinrichtungen nicht mit dem Detektionsbereich der Nachtsichtgeräte deckt, können Windenergieanlagen bei Nachtflügen übersehen werden, und es kann zu Gefahrensituationen kommen.

Erfindungsgemäß wird daher zusätzlich zu der sichtbares Licht abstrahlenden VIS-LED jeweils wenigstens eine im NIR-Bereich ausstrahlende Leuchtquelle an der Windenergieanlage angeordnet.

Die VIS- und NIR-LEDs sind erfindungsgemäß in mehreren, in vertikaler Richtung übereinander angeordneten, ringförmigen Reihen angeordnet, wobei mindestens zwei Reihen VIS-LEDs und mindestens zwei andere Reihen NIR-LEDs aufweisen.

Unter einer im NIR-Bereich ausstrahlenden Leuchtquelle wird hier eine Quelle verstanden, deren Abstrahlspektrum überwiegend im Wellenlängenbereich von λ = 750-1500 nm, vorzugsweise im Wellenlängenbereich von λ = 800-850 nm liegt. Die im NIR-Bereich ausstrahlende Leuchtquelle kann bspw. ebenfalls eine NIR-LED sein mit einer maximalen Leuchtintensität im NIR-Bereich. Es ist jedoch auch denkbar, die NIR-Leuchtquelle als konventionelle Lampe mit NIR-Filter auszugestalten, als Halogenlampe mit Wolframdraht oder als zusätzliches NIR-Gerät.

Die NIR-Leuchtquelle kann eine NIR-LED aufweisen oder als solche ausgebildet sein. Die NIR-Leuchtquelle kann aber auch eine konventionelle Leuchte, insbesondere Entladungslampe oder Glühdrahtlampe aufweisen, die von einem NIR-Filter umgeben ist, der nur oder vor allem die NIR Strahlung durchlässt. Die NIR-Leuchte kann auch als NIR-Hindernislicht ausgebildet sein.

Das Abstrahlspektrum der NIR-Leuchtquelle und der Detektionsbereich der Nachtsichtgeräte sind aufeinander abgestimmt.

Die Flugbefeuerungseinrichtung schaltet bei Dunkelheit in einen Nachtbefeuerungsmodus, und der Nachtbefeuerungsmodus wird bei Helligkeit verlassen. Die wenigstens eine NIR-Leuchtquelle wird mit dem Nachtbefeuerungsmodus an- und abgeschaltet. Unter Dunkelheit und Helligkeit wird hier der über geltende Sicherheitsstandards vorgegebene Helligkeitswert verstanden, der das Einschalten der Flugbefeuerungseinrichtung erforderlich macht bzw. das Abschalten gestattet.

Der NIR-Leuchtquelle kann vorzugsweise eine Detektionseinrichtung vorgeschaltet sein, die einen Dämmerungsschalter umfasst, so dass ein automatisches Ein- und Abschalten in Abhängigkeit eines Helligkeitsgrenzwertes bei Eintritt der Dämmerung bzw. bei Eintritt des Morgengrauens vorgenommen wird.

In einer anderen Ausführungsform der Erfindung spricht die Detektionseinrichtung auf ein externes Anschaltsignal an, wie bspw. ein Transpondersignal eines Flugzeugs oder ein anderes externes Funksignal. Damit wird die NIR-Befeuerung lediglich bei Näherung eines die Signatur abtrahlenden Flugzeugs angeschaltet.

Günstigerweise werden Blinkimpulse der wenigstens einen sichtbaren VIS-LED und der wenigstens einen NIR-Leuchtquelle miteinander synchronisiert, und zwar in der Weise, dass sichtbare VIS-LEDs und die NIR-Leuchtquelle einander zugeordnet werden und in gleichmäßigen, vorzugsweise gleichbleibenden zeitlichen Abständen Blinkimpulse, bzw. Blinkimpulsfolgen aussenden. Insbesondere sollten die Blinkimpulse der VIS-LEDs und der NIR-Leuchtquelle derart synchronisiert sein, dass beide gleichzeitig Licht abgeben.

Hinsichtlich der Windenergieanlage wird die Aufgabe durch eine eingangs genannte Windenergieanlage mit den kennzeichnenden Merkmalen des Anspruchs 6 erfüllt.

Die Flugbefeuerungseinrichtung weist wenigstens eine mit maximaler Intensität im NIR-Bereich abstrahlende NIR-Leuchtquelle auf.

Vorzugsweise ist neben der LED eine NIR-Leuchtquelle am Maschinenhaus, vorzugsweise auf dem Dach des Maschinenhauses der Windenergieanlage, montiert. Günstigerweise sind am Dach des Maschinenhauses außen zwei voneinander beabstandete NIR-Leuchtquellen vorgesehen. Ein Abstand quer zur Längsrichtung des Maschinenhauses bzw. entlang, vorzugsweise parallel zur Drehebene des Rotorblattes, ist vorzugsweise größer als ein Durchmesser eines Rotorblattes auf Höhe der NIR-Leuchtquellen.

Die sichtbare LED ist günstigerweise über eine Synchronisationseinheit, vorzugsweise in oben beschriebener Weise, mit der wenigstens einen NIR-Leuchtquelle synchronisiert. Die Synchronisationseinheit steuert die NIR-Leuchtquellen gleichzeitig blinkend an. Vorzugsweise ist neben jeder der sichtbaren LEDs eine weitere NIR-Leuchtquelle angeordnet.
In einer bevorzugten Weiterbildung der Erfindung umfasst die Flugbefeuerungseinrichtung wenigstens eine Leuchtquelle, die eine Vielzahl von die Leuchtquelle entlang eines äußeren horizontalen Umfanges umlaufenden VIS-LEDs und NIR-LEDs aufweist. Dabei sind LEDS derart angeordnet sind, dass in jeder horizontalen Richtung wenigstens eine VIS-LED mit maximaler Intensität und wenigstens eine NIR-LED abstrahlt. Dadurch können aus allen Richtungen sich nähernde Flugzeuge sowohl durch sichtbares Licht als auch durch NIR- Strahlung gewarnt werden.

Die Leuchtquelle kann als integriertes Bauteil ausgebildet sein. Dadurch wird eine einfache Montage ermöglicht.

In einer besonders günstigen Ausführungsform der Erfindung weist die Flugbefeuerungseinrichtung eine Detektionseinrichtung für externe Anschaltsignale auf. Insbesondere kann es sich bei der Detektionseinrichtung um einen Dämmerschalter und/oder die Detektionseinrichtung für die Signatur bzw. das Transpondersignal eines Flugkörpers handeln.

Hinsichtlich des zweiten Verfahrens zum Betrieb des Windparks wird die Aufgabe durch ein eingangs genanntes Verfahren mit den Merkmalen des Anspruchs 11 erfüllt. Erfindungsgemäß werden die Flugbefeuerungen mehrerer Windenergieanlagen eines Windenergieanlagenparks miteinander synchronisiert. Die Flugbefeuerung erzeugt im Betrieb durch jede der NIR-Leuchtquellen NIR-Blinkimpulse. Die NIR-Blinkimpulse verschiedener Windenergieanlagen werden derart synchronisiert, dass sie gleichzeitig auftreten. Die Synchronisation kann dabei durch ein Synchronisationssignal oder vorzugsweise durch eine aus einem Zeitsignal abgeleitete zeitliche Gleichzeitigkeit hergestellt werden. Im letzteren Fall kann das Zeitsignal durch Erfassen eines am Standort empfangbaren externen Funksignals (z. B. GPS, RDS oder DCF77) und Ableiten einer vorgegebenen Blinkimpulszeit hergestellt werden.

Die Synchronisation erfolgt vorzugsweise über ein von einer Flugbefeuerung erzeugtes Synchronisationssignal, das den Flugbefeuerungseinrichtungen der einzelnen Windenergieanlagen zugeleitet wird.

Es ist auch denkbar, die Flugbefeuerung auf ein externes Funksignal zu synchronisieren.

Die Aufgabe wird hinsichtlich des Windparks durch einen Windpark zur Durchführung des oben genannten Verfahrens gelöst, mit den Merkmalen des Anspruchs 13. Erfindungsgemäß ist eine Synchronisationseinheit der Flugbefeuerungseinrichtungen von wenigstens zwei Windenergieanlagen des Windparks vorgesehen. Die Synchronisationseinheit kann ein Synchronisationssignal erzeugen, das den Flugbefeuerungseinrichtungen der einzelnen Windenergieanlagen zugeleitet wird.

Die Erfindung wird anhand eines Ausführungsbeispiels in fünf Figuren beschrieben. Dabei zeigen:
- Fig. 1a: die schematische Frontansicht einer erfindungsgemäßen Windenergieanlage,
- Fig. 1b: die schematische Seitenansicht der Windenergieanlage: in Fig. 1a,
- Fig. 2: eine Prinzipschaltung für die erfindungsgemäße Infrarotleuchte,
- Fig. 3: einen erfindungsgemäßen Windpark,
- Fig. 4: Leuchtquelle.

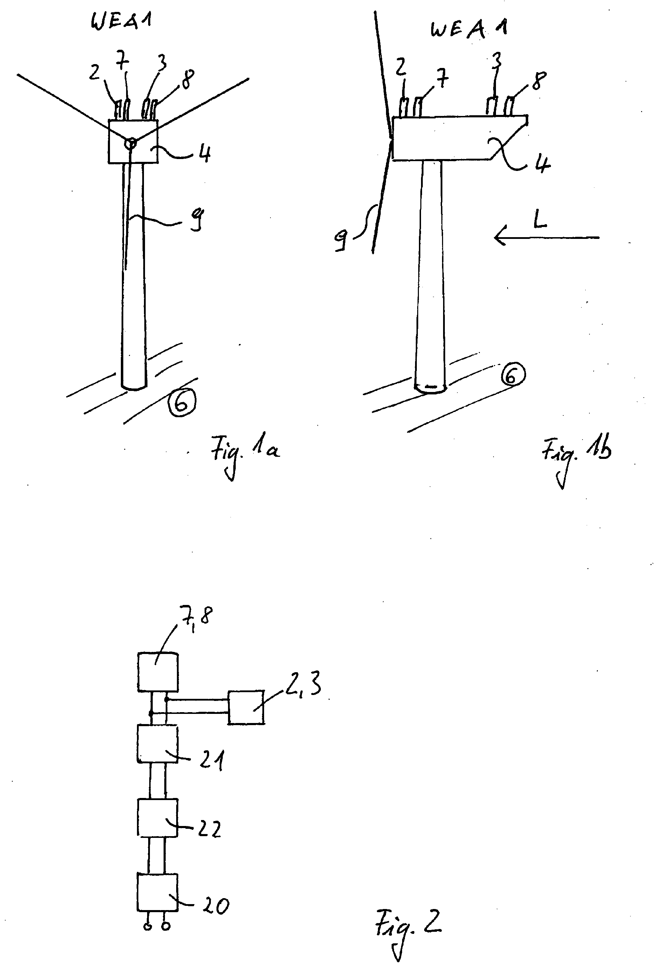

Die in den Fig. 1a, Fig. 1b dargestellte erfindungsgemäße Windenergieanlage WEA 1 weist zunächst die in herkömmlicher Weise verwendeten, wenigstens zwei LED-Arrays 2, 3 auf, die auf einem Dach des Maschinenhauses 4 voneinander beabstandet, schräg versetzt angeordnet sind. Unter einem Array wird hier eine bestimmte Anordnung von mehreren LEDs verstanden. Es kann aber auch eine einzelne LED in einem LED-Array vorgesehen sein. Die relative Anordnung der beiden LED-Arrays 2, 3 ist dabei aufgrund von Sicherheitsvorgaben so gewählt, dass in der Frontalansicht gemäß Fig. 1 a von einem Punkt in Höhe des Maschinenhauses 4 über dem Meeresspiegel bzw. Erdboden 6 auf das Maschinenhaus 4, trotz des vorbeistreichenden oder festgestellten Rotorblattes 9, wenigstens immer eines der beiden LED-Arrays 2, 3 sichtbar ist, um sicher einen sich auf Höhe des Maschinenhauses 4 der Windenergieanlage 1 nähernden z. B. Helikopter zu warnen. Die beiden LED-Arrays 7, 8 sind senkrecht zu einer Längsrichtung L des Maschinenhauses weiter als der Durchmesser der Rotorblattes 9 in gleicher Höhe über dem Meeresboden bzw. Erdboden 6 voneinander beabstandet.

Einzelne LEDs weisen eine stark richtungsabhängige Abstrahlintensität auf. Die Abstrahlintensität ist am stärksten in Hauptstrahlrichtung der LED und in einem Winkel von etwa 20° um die Hauptstrahlrichtung keulenförmig abnehmend ausgebildet. Um die Richtungsabhängigkeit der Abstrahlintensität auszugleichen, werden in der Regel mehrere LEDs als Array 2, 3 angeordnet. Die Abstrahlintensität ist bei den LED-Arrays 2, 3 entlang eines horizontalen 360° Umfanges etwa gleichbleibend.

Grundsätzlich ist das Wellenlängenspektrum einer VIS-LED relativ schmal. Je nach abgestrahlter Farbe ist es zwischen λ = 610 bis 750 nm bei roten LEDs oder zwischen λ = 400 bis 450 nm bei violetten LEDs. Die in den Figuren 1 a und 1 b dargestellten VIS-LED-Arrays 2, 3 weisen mehrere einzelne LEDs mit gleichem Abstrahlspektrum auf. Die einzelnen VIS-LEDs der Arrays 2, 3 sind derart angeordnet, dass jedes der Arrays 2, 3 in alle Richtungen in der horizontalen Ebene im Wesentlichen mit gleicher Leistung abstrahlt.

Üblicherweise muss nach international geltenden Vorschriften (z. B nach der ICAO Anhang 14 Band I) "Rot" als Lichtfarbe für Hindernisfeuer und Gefahrenfeuer verwendet werden. Zusätzlich kann es auch eine weiße Tagesbefeuerung geben, die anstelle oder zusätzlich zu roten Farbmarkierungen verwendet wird. Die weiße Tagesmarkierung wird aber nachts abgeschaltet.

Erfindungsgemäß sind auf dem Dach des Maschinenhauses 4 zusätzlich zu den sichtbares Licht abstrahlenden VIS-LED-Arrays 2, 3 zwei NIR-LED-Arrays 7, 8 angeordnet. Die in den Figuren 1a und 1b dargestellten NIR-LED-Arrays 7, 8 strahlen ebenfalls jeweils ein Licht in einem eng begrenzten Spektralbereich ab.

Die beiden NIR-LED-Arrays 7, 8 sind senkrecht zur Längsrichtung L in einem Abstand voneinander positioniert, der größer als der Durchmesser des Rotorblattes 9 auf Höhe der NIR-LED-Arrays 7,8 ist. Die eine der beiden NIR-LED-Arrays 7 ist an dem dem Rotorblatt 9 zugewandten Ende des Daches des Maschinenhauses 4 angeordnet, die andere NIR-LED-Array 8 ist an dem vom Rotorblatt 9 abgewandten Ende des Daches des Maschinenhauses 4 angeordnet.

Jede der NIR-LED-Arrays 7, 8 ist jeweils neben einer der beiden herkömmlichen VIS-LED-Arrays 2, 3 positioniert. Fig. 1b zeigt die Anordnung der LED-Arrays/NIR-LED-Arrays 2, 3, 7, 8 in Längsrichtung L auf dem Dach des Maschinenhauses 4 der Windenergieanlage WEA 1 in einer Seitenansicht. Die NIR-LED-Arrays 7, 8 sind in Längsrichtung L des Maschinenhauses 4, die der Längsrichtung L der Antriebswelle des Rotors entspricht, möglichst voneinander beabstandet und am rotorblattzugewandten Ende des Daches des Maschinenhauses 4 bzw. am rotorblattabgewandten Ende des Daches des Maschinenhauses 4 montiert. Senkrecht zur Längsrichtung L sind die NIR-LED-Arrays 7, 8 weiter voneinander beabstandet als der Durchmesser eines Rotorblattes auf Höhe der NIR-LED-Arrays 7, 8.

Die NIR-LED-Arrrays 7, 8 und VIS-LED-Arrays 2, 3 sind jeweils in unterschiedlichen Höhen über dem Dach des Maschinenhauses 4 angeordnet, um sich möglichst wenig abzudecken.

Entsprechendes gilt für die erfindungsgemäße Anordnung der NIR-LED-Arrays 7, 8. Die hier verwendeten NIR-LED-Arrays 7, 8 strahlen bei einer Wellenlänge von λ = 850 nm mit höchster Intensität ab.

Verwendet werden kann bspw. die CEL-LI-IR850-230-F NIR-LED der Contarnex Europe Limited. Sie verfügt über eine Leistung von P = 4 W und eine Arbeitswechselspannung von U = 230 Volt.

Den NIR-LED-Arrays 7, 8 ist jeweils ein Überspannungsschutz vorgeschaltet. Die NIR-LED-Arrays 7, 8 weisen in horizontaler Richtung ein Strahlenbild mit im Wesentlichen gleicher Intensität entlang des 360° Umfanges auf. Im vertikalen Strahlenbild beträgt der Streuwinkel etwa 15°. Die NIR-LED-Arrays 7, 8 sind wartungsarm und auch für den Offshore-Einsatz geeignet.

Fig. 2 zeigt eine erfindungsgemäße Verschaltung der NIR-LED-Arrays 7, 8 an den herkömmlicherweise verwendeten LED-Arrays 2, 3. Die NIR-LED-Arrays 7, 8 werden parallel zu den LED-Arrays 2, 3 geschaltet. LED-Arrays 2, 3 und NIR-LED-Arrays 7, 8 sind über einen Überspannungsschutz 20 an eine Regelspannung U_{R} angeschlossen. Die Regelspannung U_{R} regelt mittels einer Regelschaltung 21 eine Stromversorgungseinheit 22. Die Stromversorgungseinheit 22 ist als Akkumulator ausgebildet und wird über die Windenergieanlage 1 selbst mit Strom gespeichert.

Den Regelimpuls zur Anschaltung der NIR-LED-Arrays 7, 8 liefert eine (nicht dargestellte) Detektionseinrichtung. Die Detektionseinrichtung kann zum einen als Dämmerungsschalter ausgebildet sein, der bei Unterschreiten einer Außenlichtstärke einen Regelimpuls ausgibt und die LED-Arrays 2, 3 und die NIR-LED-Arrays 7, 8 somit automatisch bei Unterschreiten einer vorgegebenen Außenlichtstärke einschaltet.

Die Detektionseinrichtung kann gleichzeitig oder stattdessen als Detektionseinrichtung für eine von einem Fluggerät angestrahlte Signatur eines Transponders ausgebildet sein. Bei Detektion der Signatur wird ebenfalls ein Regelimpuls versendet, der die LED-Arrays 2, 3 und die NIR-LED-Arrays 7, 8 anschaltet und somit den herannahenden Flugkörper durch Anschalten der Flugbefeuerungseinrichtung im sichtbaren, aber auch im NIR-Bereich warnt.

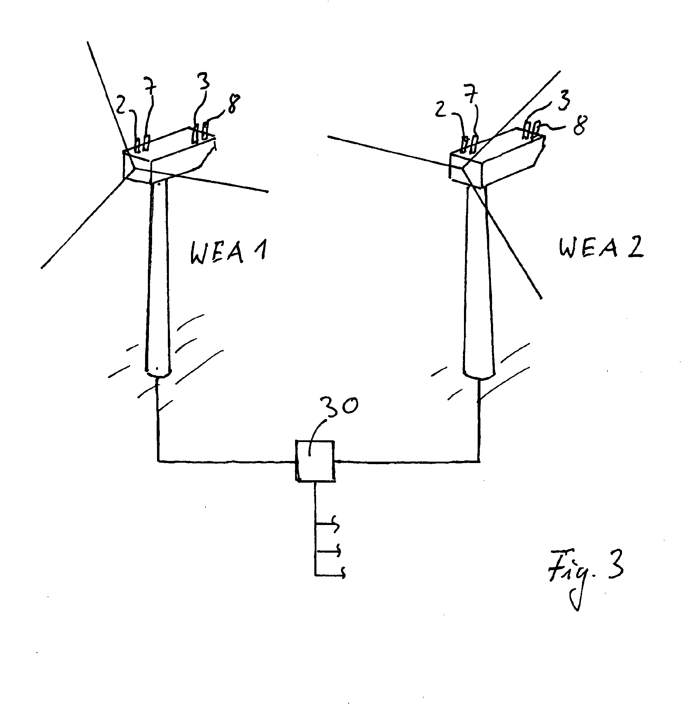

Fig. 3 zeigt einen Windpark mit zwei Windenergieanlagen WEA 1, WEA 2, die über eine Synchronisationseinheit 30 miteinander gekoppelt sind. Die Synchronisationseinheit 30 erzeugt ein Synchronisationssignal, das jeder der Windenergieanlagen WEA1, WEA2 zugeführt wird und das die Flugbefeuerungseinrichtungen ansteuert und so synchronisiert. Die Synchronisationseinheit 30 weist weitere Anschlüsse für weitere Windenergieanlagen des Parks auf.

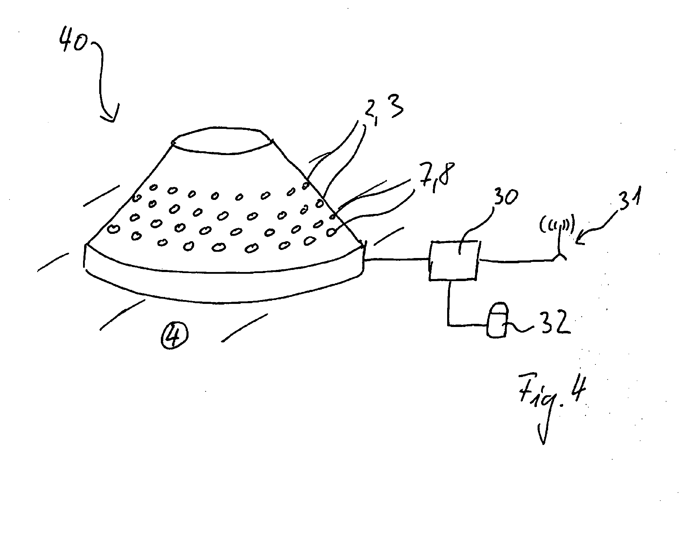

Fig. 4 zeigt eine Leuchtquelle 40 die zwei VIS-LED-Arräys und zwei NIR-LED-Arrays aufweist. Jeder der Arrays 2, 3, 7, 8 besteht aus eine die Leuchtquelle 40 entlang eines kreisförmigen Außenumfangs umlaufenden Reihe einzelner LEDs. Die dem Dach des Maschinenhauses 4 benachbarten beiden NIR-LED Reihen 7, 8 weisen ausschließlich NIR-LEDs auf. Die beiden weiter vom Maschinenhaus 4 beabstandeten LED-Reihen sind reine VIS-LED Reihen 7, 8.

Die Leuchtquelle 40 ist ein integriertes Bauteil, das auf dem Dach des Maschinenhauses 4 montierbar ist. Es ist in einem Querschnitt parallel zum Dach des Maschinenhauses 4 kreisförmig und in einem Querschnitt senkrecht dazu kegelstumpfförmig ausgebildet.

Das Blinkverhalten der LED-Arrays 2, 3, 7, 8 wird über eine Synchronisationseinheit 30 gesteuert. Die Synchronisationseinheit 30 wird von einem Dämmerungsschalter 32 ein- bzw. ausgeschaltet, wenn Helligkeitswerte der Umgebung der Leuchtquelle 40 vorgegebene Helligkeitsgrenzwerte unter- bzw. überschreiten. Die Synchronisation mehrerer Windenergieanlagen WEA 1, WEA 2 eines Windparks erfolgt mittels eines über eine Empfangseinheit 31 detektierbaren Zeitsignals. Dabei kann es sich um ein GPS- oder auch um ein DCF77 Zeitsignal handeln, das von allen Leuchtquellen 40 des Windparks über jeweils eine ihnen zugeordnete Empfangseinheit 32 empfangen wird und eine ihnen jeweils zugeordnete Synchronisationseinheit 30 beaufschlagt. Zusätzlich ist die Empfangseinheit 31 für den Empfang eines Transpondersignals eines Flugzeugs ausgelegt. Dabei sendet das Flugzeug bei Annäherung an die Windenergieanlage WEA1 WEA2 ein Transpondersignal mit Daten seiner Position und Signatur aus, das von der Empfangseinheit 31 empfangen und von der Synchronisationseinheit 30 als Flugzeugsignatur erkannt wird. Die Synchronisationseinheit 30 ermittelt den Abstand des Flugzeugs von der Windenergieanlage WEA1 und schaltet bei Unterschreiten eines kleinsten zulässigen Abstandswertes die Leuchtquelle 40 der Flugbefeuerungseinrichtungen ein.

Alternativ kann die Synchronisationseinheit 30 mit mehreren Leuchtquellen 40 verbunden sein. Dabei kann die Synchronisationseinheit 30 auch mit Leuchtquellen 40 mehrerer oder aller Windenergieanlagen WEA 1, WEA 2 des Parks über Kabel oder Funk verbunden sein und so die einzelnen Leuchtquellen 40 synchronisieren.

### Bezugszeichen

- WEA 1: Windenergieanlage
- WEA 2: Windenergieanlage
- 2: LED-Array
- 3: LED-Array
- 4: Maschinenhaus
- 6: Meeresspiegel bzw. Erdboden
- 7: NIR-LED-Array
- 8: NIR-LED Array
- 9: Rotorblatt
- 20: Überspannungsschutz
- 21: Regelschaltung
- 22: Stromversorgungseinheit
- 30: Synchronisationseinheit
- 31: Empfangseinheit
- 32: Dämmerungsschalter
- 40: Leuchtquelle

- L: Längsrichtung
- U_{R}: Regelspannung

## Patentansprüche

1. Verfahren zum Betrieb einer Windenergieanlage (WEA1, WEA2), indem eine Flugbefeuerungseinrichtung, deren Leuchtmittel VIS-LEDs (2, 3) aufweisen, eingeschaltet wird und die VIS-LEDs (2, 3) mit einer maximalen Intensität im Bereich des sichtbaren Lichtes abstrahlen,
**dadurch gekennzeichnet, dass**
mit der Flugbefeuerungseinrichtung wenigstens eine NIR-LED (7, 8) eingeschaltet wird und
die wenigstens eine NIR-LED (7, 8) mit maximaler Intensität im NIR-Bereich abstrahlt und VIS- und NIR-LEDs (2, 3, 7, 8) in mehreren, in vertikaler Richtung übereinander angeordneten, ringförmigen Reihen angeordnet werden, wobei mindestens zwei Reihen VIS-LEDs (2, 3) und mindestens zwei andere Reihen NIR-LEDs (7, 8) aufweisen.

2. Verfahren nach Anspruch 1,
**dadurch gekennzeichnet, dass** die wenigstens eine NIR-LED (7, 8) mit maximaler Intensität in einem Bereich von λ = 750-950 nm abstrahlt.

3. Verfahren nach Anspruch 1 oder 2,
**dadurch gekennzeichnet, dass** die wenigstens eine NIR-LED (7, 8) mit einer maximalen Intensität bei λ=800-850 nm abstrahlt.

4. Verfahren nach wenigstens einem der Ansprüche 1, 2 oder 3,
**dadurch gekennzeichnet, dass** die Flugbefeuerungseinrichtung bei Dunkelheit in einen Nachtbefeuerungsmodus geschaltet wird und der Nachtbefeuerungsmodus bei Helligkeit ausgeschaltet wird und die wenigstens eine NIR-LED (7, 8) mit dem Nachtbefeuerungsmodus an- und abgeschaltet wird.

5. Verfahren nach wenigstens einem der Ansprüche 1 bis 4,
**dadurch gekennzeichnet, dass** die wenigstens eine NIR-LED (7, 8) durch ein externes Anschaltsignal angeschaltet wird.

6. Windenergieanlage (WEA1, WEA2) zur Durchführung eines Verfahrens nach wenigstens einem der Ansprüche 1 bis 5 mit einer Flugbefeuerungseinrichtung, deren Leuchtmittel mit einer maximalen Intensität im Bereich des sichtbaren Lichtes abstrahlende VIS-LEDs (2, 3) aufweisen,
**dadurch gekennzeichnet, dass** die Flugbefeuerungseinrichtung wenigstens eine mit maximaler Intensität im NIR-Bereich abstrahlende NIR-LED (7, 8) aufweist und VIS- und NIR-LEDs (2, 3, 7, 8) in mehreren, in vertikaler Richtung übereinander angeordneten, ringförmigen Reihen angeordnet sind, wobei mindestens zwei Reihen VIS-LEDs (2, 3) und mindestens zwei andere Reihen NIR-LEDs (7, 8) aufweisen.

7. Windenergieanlage (WEA1, WEA2) nach Anspruch 6,
**dadurch gekennzeichnet, dass** die wenigstens eine NIR-LED (7, 8) mit maximaler Intensität im Bereich von λ = 650-1000 nm abstrahlt.

8. Windenergieanlage (WEA1, WEA2) nach Anspruch 6 oder 7,
**gekennzeichnet durch** eine Empfangseinheit (31) für externe Anschaltsignale und eine Synchronisationseinheit (30) die das externe Anschaltsignal in ein internes Anschaltsignal der Flugbefeuerungseinrichtung umwandelt.

9. Windenergieanlage nach Anspruch 8,
**gekennzeichnet durch** einen die Synchronisationseinheit (30) schaltenden Dämmerungsschalter (32).

10. Windenergieanlage nach Anspruch 9,
**gekennzeichnet durch** wenigstens eine Leuchtquelle, die eine Vielzahl von die Leuchtquelle entlang eines äußeren horizontalen Umfanges umlaufenden VIS-LEDs (2, 3) und NIR-LEDs (7, 8) aufweist, die derart angeordnet sind, dass in jeder horizontalen Richtung wenigstens eine VIS-LED (2, 3) mit maximaler Interisität abstrahlt und wenigstens eine NIR-LED (7, 8) abstrahlt.

11. Verfahren zum Betrieb eines Windparks mit wenigstens zwei Windenergieanlagen (WEA1, WEA2) nach wenigstens einem der Ansprüche 6 bis 10, die jeweils wenigstens eine NIR-LED (7, 8) aufweisen, indem
die NIR-LEDs (7, 8) NIR-Blinkimpulse aussenden und
die NIR-LEDs (7, 8) unterschiedlicher Windenergieanlagen (WEA1, WEA2) synchronisiert werden.

12. Verfahren zum Betrieb eines Windparks nach Anspruch 11,
**dadurch gekennzeichnet, dass** die NIR-LEDs (7, 8) unterschiedlicher Windenergieanlagen (WEA1, WEA2) mittels eines externen Zeitsignals synchronisiert werden.

13. Windpark zur Durchführung eines Verfahrens nach Anspruch 12,
**gekennzeichnet durch** eine Synchronisationseinheit (30) der Flugbefeuerungseinrichtung der wenigstens zwei Windenergieanagen (WEA1, WEA2), mit der sowohl die Blinkimpulse der NIR-LEDs (7, 8) sowie die Blinkimpulse der VIS-LED-Arrays (2, 3) unterschiedlicher Windenergieanlagen (WEA1, WEA2) zeitlich synchronisierbar sind.

14. Windpark nach Anspruch 13,
**gekennzeichnet durch** wenigstens eine Empfangseinheit (31) für ein externes Zeitsignal für jede der Windenergieanlagen (WEA 1, WEA 2), die jeweils eine Synchronisationseinheit (30) mit einem Synchronisationsimpuls beaufschlagt.

## Claims

1. A method of operating a wind energy plant (WEA1, WEA2), by a flight navigation device, the lighting means of which have VIS-LEDs (2, 3), being switched on and the VIS-LEDs (2, 3) radiating with a maximum intensity in the range of visible light, **characterized in that** at least one NIR-LED (7, 8) is switched on with the flight navigation device, and the at least one NIR-LED (7, 8) radiates with a maximum intensity in the NIR range and that the VIS-LEDs (2, 3) and NIR-LEDs (7, 8) are arranged in a plurality of annular rows arranged one above the other in the vertical direction, and at least two rows have VIS-LEDs (2, 3) and at least two further rows have NIR-LEDs (7, 8).

2. A method according to Claim 1, **characterized in that** the at least one NIR-LED (7, 8) radiates with a maximum intensity in a range of from λ = 750 to 950 nm.

3. A method according to Claim 1 or 2, **characterized in that** the at least one NIR-LED (7, 8) radiates with a maximum intensity at from λ = 800 to 850 nm.

4. A method according to at least one of Claims 1, 2 or 3, **characterized in that** the flight navigation device is switched into a night navigation mode in darkness and the night navigation mode is switched off in brightness, and the at least one NIR-LED (7, 8) is switched on and off with the night navigation mode.

5. A method according to at least one of Claims 1 to 4, **characterized in that the** at least one NIR-LED (7, 8) is switched on by an external switch-on signal.

6. A wind energy plant (WEA1, WEA2) for performing a method according to at least one of Claims 1 to 5, with a flight navigation device, the lighting means of which have VIS-LEDs (2, 3) radiating with a maximum intensity in the range of visible light, **characterized in that** the flight navigation device has at least one NIR-LED (7, 8) radiating with a maximum intensity in the NIR range and VIS-LEDs (2, 3) and NIR-LEDs (7, 8) are arranged in a plurality of annular rows arranged one above the other in the vertical direction, and at least two rows have VIS-LEDs (2, 3) and at least two further rows have NIR-LEDs (7, 8).

7. A wind energy plant (WEA1, WEA2) according to Claim 6, **characterized in that** the at least one NIR-LED (7, 8) radiates with a maximum intensity in the range of from λ = 650 to 1000 nm.

8. A wind energy plant (WEA1, WEA2) according to Claim 6 or 7, **characterized by** a receiving unit (31) for external switch-on signals and a synchronization unit (30) which converts the external switch-on signal into an internal switch-on signal of the flight navigation device.

9. A wind energy plant according to Claim 8, **characterized by** a dimmer switch (32) which switches the synchronization unit (30).

10. A wind energy plant according to Claim 9, **characterized by** at least one light source which has a plurality of VIS-LEDs (2, 3) and NIR-LEDs (7, 8) which extend around the light source along an external horizontal periphery and which are arranged in such a way that in each horizontal direction at least one VIS-LED (2, 3) radiates with maximum intensity and at least one NIR-LED (7, 8) radiates.

11. A method of operating a wind farm with at least two wind energy plants (WEA1, WEA2) according to at least one of Claims 6 to 10, which each have at least one NIR-LED (7, 8), by the NIR-LEDs (7, 8) emitting NIR flashing pulses and the NIR-LEDs (7, 8) of different wind energy plants (WEA1, WEA2) being synchronized.

12. A method of operating a wind farm according to Claim 11, **characterized in that** the NIR-LEDs of different wind energy plants (WEA1, WEA2) are synchronized by means of an external time signal.

13. A wind farm for performing a method according to Claim 12, **characterized by** a synchronization unit (30) of the flight navigation device of the at least two wind energy plants (WEA1, WEA2), by which both the flashing pulses of the NIR-LEDs (7, 8) and the flashing pulses of the VIS-LED-arrays (2, 3) of different wind energy plants (WEA1, WEA2) are capable of being synchronized timewise.

14. A wind farm according to Claim 13, **characterized by** at least one receiving unit (31) for an external time signal for each of the wind energy plants (WEA 1, WEA 2), which each acts upon one synchronization unit (30) with a synchronization pulse.

## Revendications

1. Procédé pour l'exploitation d'une éolienne (WEA1, WEA2) en mettant en marche un dispositif de balisage de vol dont les sources de lumière présentent des LED VIS (2, 3) et les LED VIS (2, 3) rayonnant avec une intensité maximale dans la plage de la lumière visible,
**caractérisé en ce qu'**au moins une LED NIR (7, 8) est mise en marche avec le dispositif de balisage de vol et
que la LED NIR qui existe au moins (7, 8) rayonne avec une intensité maximale dans la plage NIR et que des LED VIS et NIR (2, 3, 7, 8) sont placées en plusieurs rangées annulaires, placées l'une au-dessus de l'autre dans le sens vertical, cependant qu'au moins deux rangées présentent des LED VIS (2, 3) et deux autres rangées des LED NIR (7, 8).

2. Procédé selon la revendication 1, **caractérisé en ce que** la LED NIR qui existe au moins (7, 8) rayonne avec une intensité maximale dans la plage de λ = 750-950 nm.

3. Procédé selon la revendication 1 ou 2, **caractérisé en ce que** la LED NIR qui existe au moins (7, 8) rayonne avec une intensité maximale dans la plage de λ = 800-850 nm.

4. Procédé selon au moins l'une des revendications 1, 2 ou 3, **caractérisé en ce que** le dispositif de balisage de vol est commuté en mode de balisage de nuit dans l'obscurité et que le mode de balisage de nuit est mis hors service en cas de luminosité et que la LED NIR qui existe au moins (7, 8) est mise en circuit et mise hors service avec le mode de balisage de nuit.

5. Procédé selon au moins l'une des revendications 1 à 4, **caractérisé en ce que** la LED NIR qui existe au moins (7, 8) est mise en circuit par un signal d'activation externe.

6. Eolienne (WEA1, WEA2) pour l'exécution d'un procédé selon au moins l'une des revendications 1 à 5 avec un dispositif de balisage de vol dont les sources de lumière présentent des LED VIS (2, 3) qui rayonnent (2, 3) avec une intensité maximale dans la plage de la lumière visible,
**caractérisée en ce que** le dispositif de balisage de vol présente au moins une LED NIR (7, 8) qui rayonne avec une intensité maximale dans la plage NIR et que des LED VIS et NIR (2, 3, 7, 8) sont placées en plusieurs rangées annulaires, placées l'une au-dessus de l'autre dans le sens vertical, cependant qu'au moins deux rangées présentent des LED VIS (2, 3) et deux autres rangées des LED NIR (7, 8).

7. Eolienne (WEA1, WEA2) selon la revendication 6, **caractérisée en ce que** la LED NIR qui existe au moins (7, 8) rayonne avec une intensité maximale dans la plage de λ = 650-1000 nm.

8. Eolienne (WEA1, WEA2) selon la revendication 6 ou 7, **caractérisée par** une unité de réception (31) pour des signaux d'activation externes et une unité de synchronisation (30) qui transforme le signal d'activation externe en un signal d'activation interne du dispositif de balisage de vol.

9. Eolienne selon la revendication 8, **caractérisée par** un interrupteur crépusculaire (32) qui commute l'unité de synchronisation (30).

10. Eolienne selon la revendication 9, **caractérisée par** au moins une source de lumière qui présente une multitude de LED VIS (2, 3) et LED NIR (7, 8) tout autour le long d'une périphérie horizontale extérieure qui sont placées de telle manière que dans chaque sens horizontal au moins une LED VIS (2, 3) rayonne avec une intensité maximale et au moins une LED NIR (7, 8) rayonne.

11. Procédé pour faire fonctionner un parc éolien avec au moins deux éoliennes (WEA1, WEA2) selon au moins l'une des revendications 6 à 10 qui présentent respectivement au moins une LED NIR (7, 8),
les LED NIR (7, 8) émettant des impulsions clignotantes NIR et
en synchronisant les LED NIR (7, 8) de différentes éoliennes (WEA1, WEA2).

12. Procédé pour faire fonctionner un parc éolien selon la revendication 11, **caractérisé en ce que** les LED NIR (7, 8) de différentes éoliennes (WEA1, WEA2) sont synchronisées au moyen d'un signal de temps externe.

13. Parc éolien pour l'exécution d'un procédé selon la revendication 12, **caractérisé par** une unité de synchronisation (30) du dispositif de balisage de vol des deux éoliennes qui existent au moins (WEA1, WEA2) avec laquelle les impulsions clignotantes des LED NIR (7, 8) aussi bien que les impulsions clignotantes des arrays LED VIS (2, 3) de différentes éoliennes (WEA1, WEA2) peuvent être synchronisées dans le temps.

14. Parc éolien selon la revendication 13, **caractérisé par** au moins une unité de réception (31) pour un signal de temps externe pour chacune des éoliennes (WEA1, WEA2) qui applique une impulsion de synchronisation à respectivement une unité de synchronisation (30).
